# EUROPEAN PATENT APPLICATION

(11) **EP 4 151 970 A1**
(43) Date of publication of application: **22.03.2023**
(21) Application number: 22195049.6
(22) Date of filing: 12.09.2022
(51) Int. Cl.: G01L 1/14

(54) **CAPACITIVE PRESSURE SENSOR**

(30) Priority: 15.09.2021 JP 2021150553
(71) Applicant: Futaba Corporation, Mobara-shi, Chiba-ken 297-0033 (JP)
(72) Inventor: IDE, Satoshi, Chiba-ken, 297-0033 (JP); TAKATA, Keisuke, Chiba-ken, 297-0033 (JP); MIYAO, Fumitaka, Chiba-ken, 297-0033 (JP); IMAJO, Kazuki, Chiba-ken, 297-0033 (JP)
(74) Representative: Samson & Partner Patentanwälte mbB

(57) **Abstract**

A capacitive pressure sensor (1) using mutual capacitance type is provided. The capacitive pressure sensor (1) comprises a dielectric layer (2), a ground electrode (3), transmission electrodes (4), reception electrodes (5) and a controller (6). The transmission electrodes and reception electrodes have a matrix structure (FIG. 3). An electric field is generated between the transmission electrodes and the reception electrodes by the controller. When the dielectric layer is deformed by a pressure applied to the ground electrode, a capacitance of the dielectric layer changes. The controller detects the unit detection area (10) where the capacitance changes and the pressure corresponding to the change in the capacitance.

## Description

### Technical Field

The present disclosure relates to a mutual capacitance type capacitive pressure sensor capable of detecting both a position in a plane and a pressure at the corresponding position by detecting a change in a capacitance between a transmission electrode and a reception electrode disposed in a dielectric layer when the dielectric layer is deformed by a pressure; and, more particularly, to a capacitive pressure sensor having a satisfactory operability and a satisfactory appearance of an operation surface.

### Background

Japanese Laid-open Patent Publication No. 2015-7562 discloses an invention of a mutual capacitance type capacitive sensor. The capacitive sensor of the invention includes a dielectric layer 30, a front side electrode portion 32X disposed on a front side of the dielectric layer 30, and a back side electrode portion 33Y disposed on a back side of the dielectric layer 30. The front side electrode portion 32X is disposed on a bottom surface of a front side base material 32 to be installed on a front side of the dielectric layer 30, and the back side electrode portion 33Y is disposed on an upper surface of a back side base material 38 to be installed on a back side of the dielectric layer 30. Further, a controller 20 is configured to detect a capacitance between the front side electrode portion 32X and the back side electrode portion 33Y to which a voltage is applied, and to measure a pressure from a change in the capacitance when the dielectric layer 30 is deformed by a pressure.

### Summary

In the conventional mutual capacitance type capacitive sensor disclosed in Japanese Laid-open Patent Publication No. 2015-7562, the front side electrode portion 32X that is an electrode on an operation surface side is disposed on a bottom surface of the front side base material 32. In other words, the front side base material 32 is interposed between the operation surface and the dielectric layer 30 to be deformed by the operation. Therefore, even if a user presses the operation surface, the dielectric layer 30 is unlikely to be deformed due to the presence of the front side base material 32, which makes it difficult to perform precise pressure detection.

Such a capacitive sensor may have a structure that displays an icon on the operation surface to improve the operability. However, in the capacitive sensor disclosed in Japanese Laid-open Patent Publication No. 2015-7562 has a structure in which the dielectric layer 30 is interposed between the front side electrode portion 32X and the back side electrode portion 33Y, so that when a light source is disposed below the capacitive sensor and light is emitted upward in order to display a display layer of an icon interposed between the layer structure on an operation surface, at least the front side electrode portion 32X directly below the operation surface closest to an operator is easily recognized, which causes a problem that the display is hindered or the display quality deteriorates.

The present disclosure has been made to solve the problems of the conventional techniques described above, and has a purpose of providing a mutual capacitance type capacitive pressure sensor having a satisfactory operability and a satisfactory appearance of an operation surface.

A capacitive pressure sensor according to the first aspect of the present disclosure is a mutual capacitance type. It comprises: a dielectric layer; a ground electrode disposed on a first surface of the dielectric layer to receive a pressure at an arbitrary position; a plurality of transmission electrodes disposed on a second surface of the dielectric layer and arranged at predetermined intervals to be parallel to a first direction; a plurality of reception electrodes disposed on the second surface of the dielectric layer and arranged at predetermined intervals to be parallel to a second direction, the second direction intersecting the first direction, the transmission electrodes and the reception electrodes intersecting each other while being insulated from each other; and a controller configured to generate an electric field between the transmission electrodes and the reception electrodes by driving the transmission electrodes, and to detect a measurement value of a capacitance of the dielectric layer when the dielectric layer is deformed by a pressure applied to an arbitrary position of the ground electrode.

A capacitive pressure sensor according to the second aspect of the present disclosure is characterized in that, in the capacitive pressure sensor according to the first aspect, the transmission electrodes and the reception electrodes have a light-transmitting property.

A capacitive pressure sensor according to the third aspect of the present disclosure is characterized in that, in the capacitive pressure sensor according to the first aspect, the ground electrode is uniformly formed on the first surface of the dielectric layer without a gap.

A capacitive pressure sensor according to the fourth aspect of the present disclosure is characterized in that, in the capacitive pressure sensor according to the first aspect, the transmission electrodes and the reception electrodes are disposed on a front surface and a back surface of an electrode substrate disposed on the second surface of the dielectric layer, respectively.

A capacitive pressure sensor according to the fifth aspect of the present disclosure is characterized in that, in the capacitive pressure sensor according to the first aspect, the transmission electrodes and the reception electrodes are laminated on a surface of an electrode substrate disposed on the second surface of the dielectric layer with an insulating layer interposed therebetween.

In a capacitive pressure sensor according to a first aspect of the present disclosure, when a controller drives a transmission electrode, an electric field is generated between the transmission electrode and a reception electrode. When a pressure is applied to a ground electrode, the dielectric layer is deformed by the pressure; the electric field generated between the transmission electrode and the reception electrodes is changed; and a capacitance between the transmission electrode and the reception electrode at a position corresponding to the deformed portion of the dielectric layer is changed. The controller can detect the position where the change in the capacitance is detected and the pressure at the corresponding position as a value corresponding to the change in the capacitance.

In this mutual capacitance type capacitive pressure sensor, the transmission electrode and the reception electrode are integrated on a second surface of the dielectric layer. Therefore, compared to the case where the electrodes are formed on both sides of the dielectric layer, the number of substrates on which the transmission electrode and the reception electrode are disposed can be reduced from two to one, and a manufacturing process becomes relatively simple. In addition, the alignment of the two electrodes is relatively easy. Further, a sensor surface that is an operation surface is formed as the ground electrode and the ground electrode is directly disposed on the surface of the dielectric layer, so that the dielectric layer is easily deformed by a pressure in the case of operating the ground electrode, and it is possible to improve the reliability of detection of a pressure and a position and the operability.

In the capacitive pressure sensor according to a second aspect, when light is irradiated from a back surface side of a sensor, which is opposite to the ground electrode that is the operation surface, the light passes through the transmission electrode and the reception electrode, and thus can be visually recognized from the sensor surface as long as the dielectric layer and the ground electrode are made of a light-transmitting material. Since the sensor surface that is the operation surface emits light, the position of the capacitive pressure sensor and the operation surface thereof can be easily recognized, and the operability is improved. If a display pattern layer is disposed at any position of a layer structure below the ground electrode, a desired pattern can be displayed on the sensor surface that is the operation surface.

In the capacitive pressure sensor according to a third aspect, the ground electrode forming the sensor surface that is the operation surface is formed as a film having a uniform pattern without a gap on a first surface of the dielectric layer, e.g., a thin planar film. Thus, when the ground electrode is pressed, the degree of deformation of the dielectric layer with respect to a pressing force becomes uniform regardless of a pressing position, and it is possible to further improve the reliability of the detection of the pressure and the position and the operability.

In the capacitive pressure sensor according to a fourth aspect, the transmission electrode and the reception electrode are disposed on the front surface and the back surface of one electrode substrate, respectively, and the electrode substrate is disposed on the second surface of the dielectric layer. Hence, an insulating structure that insulates the transmission electrode and the reception electrode is not required. Accordingly, a manufacturing cost can be reduced compared to the case where the transmission electrode and the reception electrode are disposed on one surface of the electrode substrate and the insulating structure is disposed between the transmission electrode and the reception electrode.

In the capacitive pressure sensor according to a fifth aspect, the transmission electrode, an insulating layer, and the reception electrode are laminated on one surface of the electrode substrate disposed on the second surface of the dielectric layer. Therefore, the transmission electrode and the reception electrode can be positioned with high accuracy using a thin film formation technique.

### Brief Description of the Drawings

The objects and features of the present disclosure will become apparent from the following description of embodiments, given in conjunction with the accompanying drawings, in which:
FIGs. 1A and 1B schematically illustrate a principle of detection of a change in a capacitance in a mutual capacitance type capacitive pressure sensor according to an embodiment;
FIG. 2 is an exploded perspective view showing a structure of the capacitive pressure sensor according to the embodiment;
FIG. 3 is a plan view showing an electrode pattern of the capacitive pressure sensor according to the embodiment;
FIG. 4 is a plan view showing a unit detection area where a position can be identified in an operation area formed by the electrode pattern of the capacitive pressure sensor according to the embodiment;
FIG. 5 schematically shows a modification having an icon sheet in the mutual capacitance type capacitive pressure sensor according to the embodiment; and
FIG. 6 schematically shows a modification having a sheet material made of a urethane film in the mutual capacitance type capacitive pressure sensor according to the embodiment.

### Detailed Description

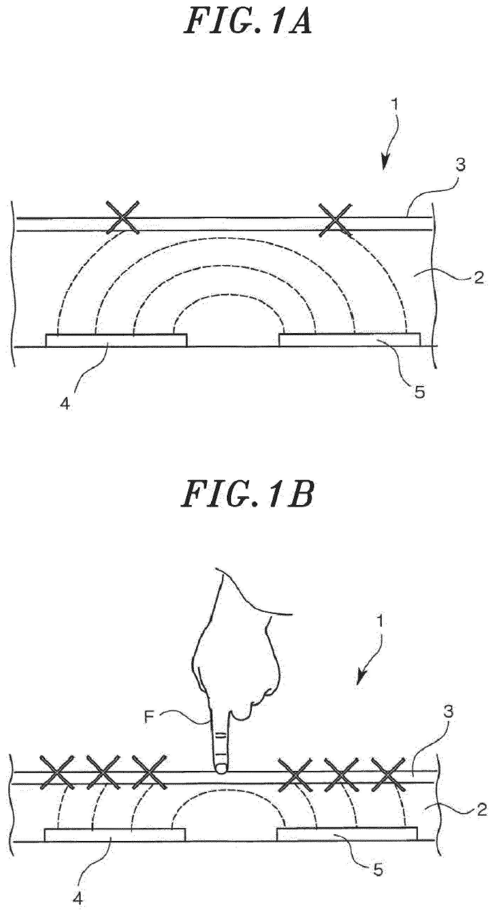

The mutual capacitance type capacitive pressure sensor 1 according to an embodiment of the present disclosure will be described with reference to FIGs. 1 to 4.

First, the basic structure of the mutual capacitance type capacitive pressure sensor 1 and the principle of detection of a position and a pressure will be described with reference to FIGs. 1A and 1B.

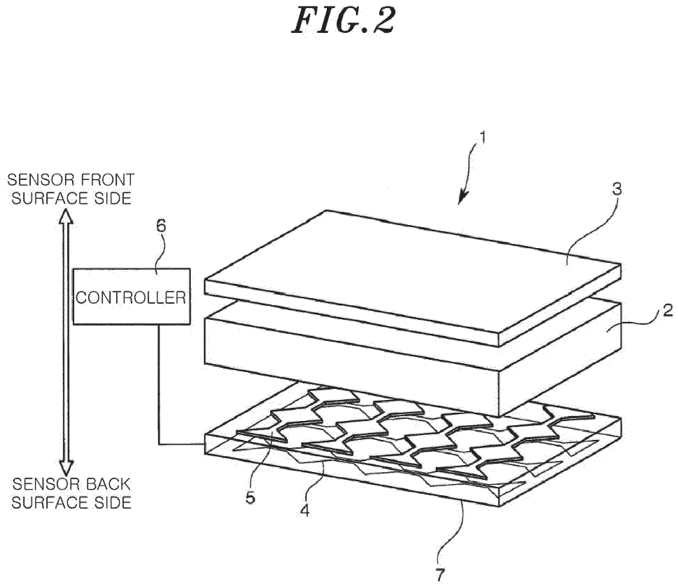

As shown in FIG. 1A, the capacitive pressure sensor 1 has a dielectric layer 2, a ground electrode 3 disposed on an upper surface that is a first surface of the dielectric layer 2, a transmission electrode 4 and a reception electrode 5 disposed on a bottom surface that is a second surface of the dielectric layer 2 while being insulated from each other, and a controller 6 (not shown in FIG. 1A, see FIG. 2) configured to drive the transmission electrode 4 and detect a measurement value of a capacitance between the transmission electrode 4 and the reception electrode 5 in response to a signal from the reception electrode 5.

When the controller 6 drives the transmission electrode 4 by a square wave, electric force lines indicated by dashed lines in FIG. 1A are generated between the transmission electrode 4 and the reception electrode 5, and an electric field is generated. The electric force lines cannot pass through the ground electrode 3, and the electric field is generated only in the dielectric layer 2. In FIGs. 1A and 1B, locations where the electric force lines are blocked by the ground electrode 3 are indicated by "X".

As shown in FIG. 1B, when a user of the sensor applies a pressure to the ground electrode 3 with a finger F, for example, the dielectric layer 2 is deformed by the pressure and has a reduced thickness. Therefore, the distance between the ground electrode 3 and the transmission electrode 4/the reception electrode 5 is reduced, the amount of electric force lines blocked by the ground electrode 3 increases. Accordingly, the electric field in the dielectric layer 2 becomes weak, and the capacitance between the transmission electrode 4 and the reception electrode 5 decreases. The controller 6 detects the pressure at the corresponding position from a change in a detection signal corresponding to the change in the capacitance.

FIGs. 1A and 1B schematically shows a part of the structure of the capacitive pressure sensor 1 in a simplified manner. Thus, only one pair of the transmission electrode 4 and the reception electrode 5 is shown, and a pressed position can be detected in only one location directly above an intermediate position between the transmission electrode 4 and the reception electrode 5 on the ground electrode 3. However, as will be described later with reference to FIGs. 2 to 4, if multiple pairs of the transmission electrode 4 and the reception electrode 5 shown in FIGs. 1A and 1B are disposed within the range of the ground electrode 3, the capacitance between the transmission electrode 4 and the reception electrode 5 at the position corresponding to the location where the ground electrode 3 is pressed is changed, whereas the capacitance between another transmission electrode 4 and another reception electrode 5 is not changed, which enables the controller 6 to detect the location where the ground electrode 3 is pressed.

Next, a specific structure of the mutual capacitance type capacitive pressure sensor 1 will be described with reference to FIGs. 2 to 4.

As shown in the exploded perspective view of FIG. 2, the capacitive pressure sensor 1 includes the dielectric layer 2. Although the dielectric layer 2 may be made of an elastic material such a rubber, or a foam material such as sponge, it is preferable to use a foam material rather than rubber because it is advantageous in detecting a position and a pressure when the dielectric layer 2 is easily deformed when pressed. Further, in the present embodiment, the material of the dielectric layer 2, such as sponge or the like, has a desired light-transmitting property.

The ground electrode 3 is disposed on the upper surface that is the first surface of the dielectric layer 2. The ground electrode 3 may be a flexible or elastic conductive uniform sheet-shaped member, e.g., a conductive fabric. In the present embodiment, the ground electrode 3 has a desired light-transmitting property.

A rigid insulating electrode substrate 7 having substantially the same outer shape as that of the dielectric layer 2 is attached to the bottom surface that is the second surface of the dielectric layer 2. The transmission electrode 4 is disposed on the bottom surface of the electrode substrate 7, and the reception electrode 5 is disposed on the upper surface of the electrode substrate 7. The transmission electrode 4 and the reception electrode 5 are made of a conductive material having a light-transmitting structure such as a mesh shape or having a light-transmitting property, or made of a light-transmitting conductive material having a light-transmitting structure. The transmission electrode 4 disposed on the bottom surface of the electrode substrate 7 is covered with an insulating film (not shown). In the present embodiment, the electrode substrate 7, the transmission electrode 4, and the reception electrode 5 have a desired light-transmitting property.

Further, the controller 6 is connected to the transmission electrode 4 and the reception electrode 5. The controller 6 drives the transmission electrode 4 and detects the measurement value of the capacitance between the transmission electrode 4 and the reception electrode 5 in response to the signal from the reception electrode 5.

In the above configuration, the ground electrode 3 side of the capacitive pressure sensor 1 serves as a sensor surface as an operation area to which a user applies a pressure with a finger or the like. The sensor surface side of the capacitive pressure sensor 1 is referred to as "sensor front surface side" and the reception electrode 5 side of the electrode substrate 7 is referred to as "sensor back surface side."

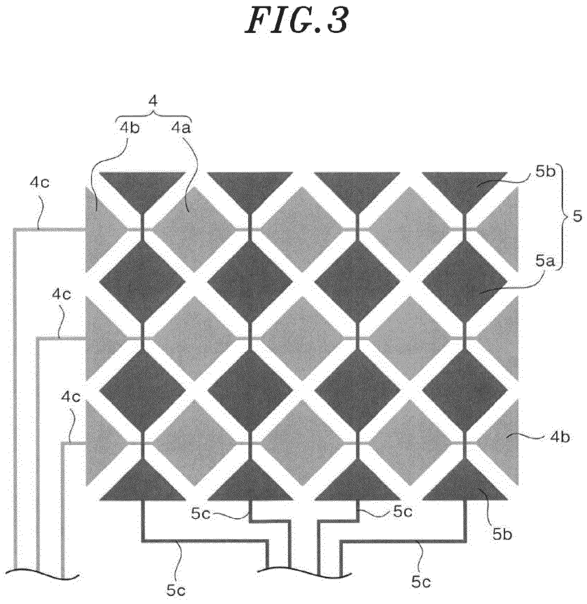

FIG. 3 is a plan view showing an example of an electrode pattern of the transmission electrode 4 and the reception electrode 5.

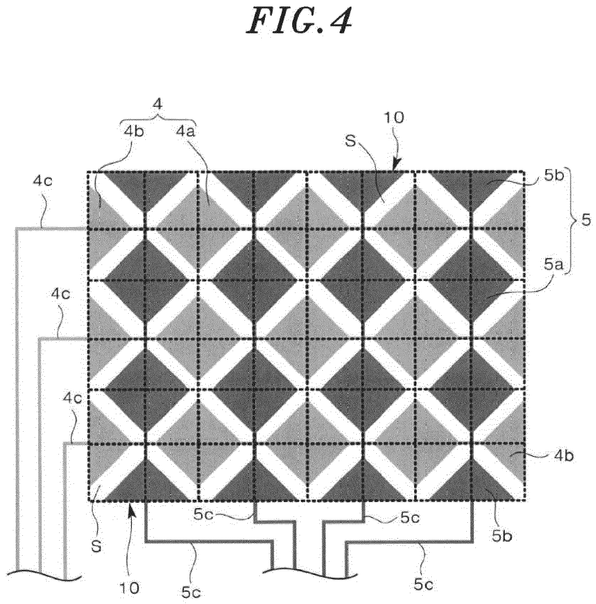

In FIG. 3, the transmission electrode 4 is illustrated in light gray. The transmission electrode 4 include a first unit electrode 4a having a square (or diamond shape) and a second unit electrode 4b having a triangular shape that is the same as a half of the square shape. In the case of arranging the electrode patterns in rows in the horizontal direction (referred to as "first direction") and columns in the vertical direction (referred to as "second direction") in FIG. 3, the first unit electrodes 4a and the second unit electrode 4b are regularly arranged in the arrangement of 3 rows × 5 columns, and the second unit electrodes 4b are located at both ends of each of the three rows. Five first unit electrodes 4a and five second unit electrodes 4b in each row are electrically connected by three lines 4c extending in the horizontal direction in FIG. 4 and connected to the controller 6. The number of the first and second unit electrodes 4a and 4b is merely an example, and the first and second unit electrodes 4a and 4b may have other shapes.

In FIG. 3, the reception electrode 5 is illustrated in dark gray. The reception electrode 5 includes a first unit electrode 5a having a square (or diamond shape) and a second unit electrode 5b having a triangular shape that is the same as a half the square shape. In the case of arranging the electrode patterns in the rows and columns similarly to the case of the transmission electrode 4, the first unit electrode 5a and the second unit electrode 5b of the reception electrode 5 are regularly arranged in the arrangement of 4 rows × 4 columns, and the second unit electrodes 5b are located at both ends of each of the four rows. Four first unit electrodes 5a and four second unit electrodes 5b in each row are electrically connected by four lines 5c extending in the vertical direction in FIG. 3 and connected to the controller 6. The number of the first and second unit electrodes 5a and 5b is merely an example, and the first and second unit electrodes 5a and 5b may have other shapes. Although the transmission electrode 4 and the reception electrode 5 have the same electrode pattern, they may have different electrode patterns.

As described above, the electrode pattern of the transmission electrode 4 has a structure in which the electrodes arranged in the horizontal row direction (first direction) in FIG. 3 are connected by the lines 4c, and the electrode pattern of the reception electrode 5 has a structure in which the electrodes arranged in the vertical column direction (second direction) in FIG. 3 are connected by the lines 5c. The plurality of rows of the transmission electrodes 4 and the plurality of columns of the reception electrodes 5 intersect each other to form a matrix.

FIG. 4 is a plan view of a unit detection area 10 that is the smallest unit capable of identifying a position on a sensor surface (operation area) having the above-described matrix structure of the transmission electrodes 4 and the reception electrodes 5. The unit detection area 10 is a square area defined by dashed lines for convenience of illustration. FIGs. 1A and 1B described above schematically show the structure of the transmission electrode 4 and the reception electrode 5 in one unit detection area 10. In the case of arranging a plurality of unit detection areas 10 shown in FIG. 4 in rows and columns similarly to the case of the transmission electrodes 4 and the reception electrodes 5, the unit detection areas 10 are arranged in six rows and eight columns, and the total number of the unit detection areas 10 is 48. In each unit detection area 10, the transmission electrode 4 and the reception electrode 5 face each other with a gap S interposed therebetween. The gap S is set to have a predetermined width and a predetermined length. In each unit detection area 10, the capacitance between the transmission electrode 4 and the reception electrode 5 is determined by the width and the length of the gap S, the material of the dielectric layer 2, and the distance between the transmission electrode 4/the reception electrode 5 and the ground electrode 3.

Next, the operation and effect of the capacitive pressure sensor 1 will be described.

When the controller 6 drives the transmission electrode 4 by a square wave, the electric force lines are generated between the transmission electrode 4 and the reception electrode 5 as described above with reference to FIG. 1A, and an electric field is generated in the dielectric layer 2. Since the electric force lines are blocked by the ground electrode 3, the electric field is generated only in the dielectric layer 2. Here, when a user of the sensor applies a pressure to the ground electrode 3 with a finger, the dielectric layer 2 is deformed by the pressure and has a reduced thickness. Therefore, the distance between the ground electrode 3 and the transmission electrode 4/the reception electrode 5 is reduced, and the amount of electric force lines blocked by the ground electrode 3 increases. Accordingly, the electric field in the dielectric layer 2 becomes weak, and the capacitance between the transmission electrode 4 and the reception electrode 4 decreases. The controller 6 detects and outputs the pressure at the corresponding position from the change of the detection signal corresponding to the change in the capacitance.

When the ground electrode 3 is pressed, the capacitance between the transmission electrode 4 and the reception electrode 5 changes in the unit detection area 10 corresponding to the pressed position and, thus, the pressed position can be specified by the matrix structure of the transmission electrodes 4 and the reception electrodes 5. In addition, two or more points can be simultaneously detected, and the detected pressure can be outputted as a heat map in which values of two-dimensional data of the detection result are visualized in different colors or shades. Therefore, the controller 6 can also detect the location where the ground electrode 3 is pressed and the pressure is detected. Particularly, in the capacitive pressure sensor 1, the ground electrode 3 forming the sensor surface is formed as a uniform pattern without a gap on the first surface of the dielectric layer 2, i.e., a thin planar film. Hence, when the ground electrode 3 is pressed, the degree of deformation of the dielectric layer 2 with respect to a pressing force becomes uniform regardless of the pressing position. Accordingly, the reliability of detection of the pressure and the position and the operability are further improved.

Further, in the capacitive pressure sensor 1, the transmission electrodes 4 and the reception electrodes 5 form a matrix structure, so that ghost does not occur even when the sensor surface is pressed at multiple locations simultaneously, compared to a self-capacitance type capacitive pressure sensor.

Further, in the capacitive pressure sensor 1, as shown in FIG. 2, the reception electrode 5 and the transmission electrode 4 are formed on the front and back surfaces of the electrode substrate 7 attached to the bottom surface of the dielectric layer 2, respectively. In the case of forming the electrodes on both sides of the dielectric layer 2, as described in the prior art, the electrodes are formed on each substrate, and each substrate is attached to the front and back surfaces of the dielectric layer 2. Accordingly, the number of components increases and the number of steps increases. On the other hand, the capacitive pressure sensor 1 requires only one electrode substrate 7, so that the number of manufacturing steps is reduced, and the positioning of the two electrodes with respect to one electrode substrate 7 becomes relatively easy.

In the capacitive pressure sensor 1, the ground electrode 3 is directly disposed on the surface of the dielectric layer 2 and serves as the sensor surface, so that the dielectric layer 2 is easily deformed by a pressure when the sensor surface is pressed, and it is possible to improve the reliability of detection of a pressure and a position and the operability.

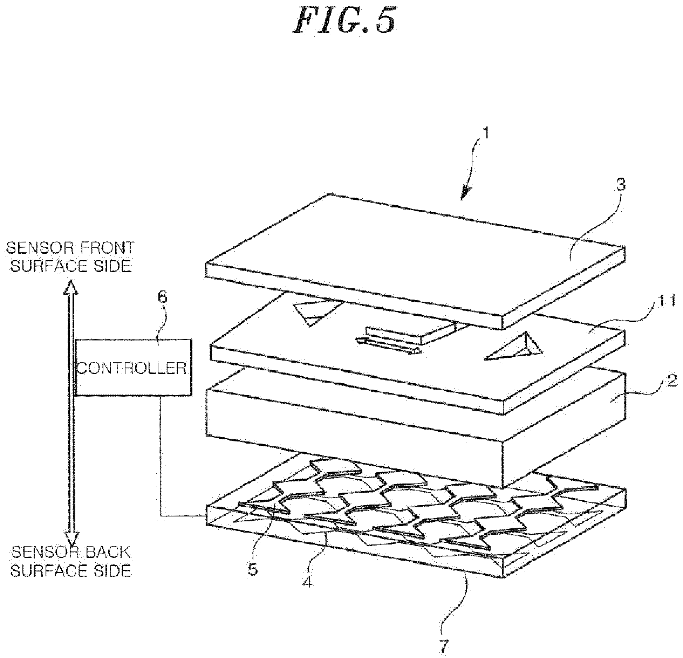

Further, in the capacitive pressure sensor 1, the light irradiated from the back surface side of the sensor is emitted toward the surface side of the sensor while passing through the transmission electrode 4, the electrode substrate 7, and the reception electrode 5, and then passing through the dielectric layer 2 and the ground electrode 3. Here, the transmission electrode 4 and the reception electrode 5 as the sensor electrodes are integrated on the bottom surface of the dielectric layer 2 that is distant from the sensor surface. Since the electrodes have a light-transmitting property and the ground electrode 3 on the upper surface of the dielectric layer 2 is flat without a specific pattern, a user can visually recognize uniform planar light emission on the sensor surface side. In other words, since the entire surface of the sensor, which is the operation surface, emits light uniformly, it is easy to recognize the existence of the capacitive pressure sensor and the position of the operation surface even in a dark place, and the operability is improved. Further, if an icon sheet (display pattern layer) is disposed at any position in the layer structure below the ground electrode 3, an icon having a desired shape can be displayed on the sensor surface that is the operation surface. FIG. 5 schematically shows a modification in which an icon sheet 11 is disposed between the dielectric layer 2 and the ground electrode 3 in the capacitive pressure sensor 1 of the embodiment. In that case, the icon can be displayed by providing the icon sheet 11 in the layer below the ground electrode 3, buy the light is diffused in the layer below the dielectric layer 2. Therefore, it is preferable to provide the icon sheet 11 below the ground electrode 3 and above the dielectric layer 2 as shown in FIG. 5. It is unnecessary to provide the icon sheet 11 in order to display the icon. Instead, the icon may be printed on the back side of the ground electrode 3.

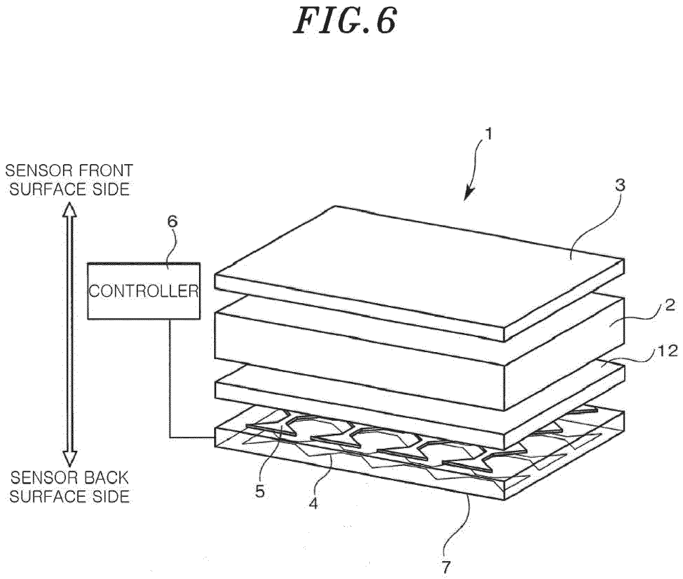

Further, in the capacitive pressure sensor 1, when the dielectric layer 2 is compressed by pressing the ground electrode 3 and has a reduced thickness, the distance between the ground electrode 3 and the transmission electrode 4/the reception electrode 5 become too small, which makes it impossible to detect the capacitance between the transmission electrode 4 and the reception electrode 5. To this end, as in the modification shown in FIG. 6, a sheet material 12 having an appropriate thickness obtained by laminating transparent urethane films is disposed between the bottom surface of the dielectric layer 2 and the electrode substrate 7. The sheet material 12 made of the urethane film is harder than the dielectric layer 2 made of foam, and is unlikely to be deformed. Thus, the sheet material 12 is prevented from being deformed and having a reduced thickness even when the dielectric layer 2 is compressed, which makes it possible to maintain a constant distance between the ground electrode 3 and the transmission electrode 4/the reception electrode 5. When the sheet material 12 made of the urethane film is disposed between the upper surface of the dielectric layer 2 and the ground electrode 3, the pressing force applied to the ground electrode 3 is hardly transmitted to the dielectric layer 2 due to the urethane film that is hard and unlikely to be deformed, and the dielectric layer 2 is unlikely to be deformed. Hence, the detection of the capacitance is hindered, which is not preferable.

In the capacitive pressure sensor 1 of the above-described embodiment, the reception electrode 5 and the transmission electrode 4 are disposed on the front and back surfaces of the electrode substrate 7, respectively. However, it is also possible to provide the transmission electrode 4 and the reception electrode 5 on any one of the front and back surfaces of the electrode substrate 7 with an insulating layer interposed therebetween. In that case, the transmission electrode 4 and the reception electrode 5 can be positioned with higher accuracy using a thin film formation technique compared to the above-described embodiment.

As described above, the capacitive pressure sensor 1 has a complex function of detecting a pressure at a position on the sensor surface touched by a user as well as the position information on the sensor surface using X and Y coordinates, and thus can be applied, as an input/output device serving as a display device of various electronic devices, to the following various purposes. For example, it is possible to detect the position on the sensor surface touched by a user using the X and Y coordinates, and also possible to detect a use's gesture at the time of touching the sensor surface using the Z coordinate. In other words, when a user presses a certain position on the sensor surface for an intended purpose, the capacitive pressure sensor 1 outputs the position information corresponding to the touched position as a signal. If it is required to determine whether or not a user's operation has been performed properly, a pressure applied when a user touches the sensor surface is detected, and a signal corresponding to the touched position is outputted only when the pressure exceeds a predetermined level. As another application example, the capacitive pressure sensor 1 may be used to detect the distribution of the pressure applied to the sensor surface. For example, the capacitive pressure sensor 1 may be disposed at a holding area of a robot hand, and pressure distribution data in the holding area of the robot hand may be acquired when the robot hand holds an object. The acquired data may be used to detect the shape of the object or to adjust a holding operation. Alternatively, the capacitive pressure sensor 1 may be disposed at a bed, and the distribution of a pressure applied by a person in a sleeping area of the bed may be detected over time. In that case, the sleep movement of the person, such as toss and turn, may be measured, which is effective in nursing or medical fields.

## Claims

1. A capacitive pressure sensor using mutual capacitance type comprising:
a dielectric layer;
a ground electrode disposed on a first surface of the dielectric layer to receive a pressure at an arbitrary position;
a plurality of transmission electrodes disposed on a second surface of the dielectric layer and arranged at predetermined intervals to be parallel to a first direction;
a plurality of reception electrodes disposed on the second surface of the dielectric layer and arranged at predetermined intervals to be parallel to a second direction, the second direction intersecting the first direction, the transmission electrodes and the reception electrodes intersecting each other while being insulated from each other; and
a controller configured to generate an electric field between the transmission electrodes and the reception electrodes by driving the transmission electrodes, and to detect a measurement value of a capacitance of the dielectric layer when the dielectric layer is deformed by a pressure applied to an arbitrary position of the ground electrode.

2. The capacitive pressure sensor of claim 1, wherein the transmission electrodes and the reception electrodes have a light-transmitting property.

3. The capacitive pressure sensor of claim 1, wherein the ground electrode is uniformly formed on the first surface of the dielectric layer without a gap.

4. The capacitive pressure sensor of claim 1, wherein the transmission electrodes and the reception electrodes are disposed on a front surface and a back surface of an electrode substrate disposed on the second surface of the dielectric layer, respectively.

5. The capacitive pressure sensor of claim 1, wherein the transmission electrodes and the reception electrodes are laminated on a surface of an electrode substrate disposed on the second surface of the dielectric layer with an insulating layer interposed therebetween.
